# EUROPÄISCHE PATENTSCHRIFT

(11) **EP 1 520 690 B1**
(45) Veröffentlichungstag und Bekanntmachung des Hinweises auf die Patenterteilung: **27.07.2011**
(21) Anmeldenummer: 03103495.2
(22) Anmeldetag: 22.09.2003
(51) Int. Cl.: B32B 27/32, G09F 3/02, G09F 3/10

(54) **Adhäsionsfolie**
adhesive film
pellicule d'adhesion

(43) Veröffentlichungstag der Anmeldung: 06.04.2005
(73) Patentinhaber: Hoefer, Holger, 58239 Schwerte (DE); Hoefer, Joerg, 1640 Rhode-St.-Genèse (BE)
(72) Erfinder: Hoefer, Holger, 58239 Schwerte (DE); Hoefer, Joerg, 1640 Rhode-St.-Genèse (BE)
(74) Vertreter: von Kreisler Selting Werner

(56) Entgegenhaltungen:
- EP-A- 0 317 166
- WO-A-91/17944
- DE-A- 10 012 261
- US-A1- 2002 177 669

## Beschreibung

### Einleitung

Die Erfindung betrifft eine PVC-freie Kunststoffverbundfolie, die klebstofffrei durch Adhäsion auf glatten (glänzenden) Oberflächen haftet und die Verwendung dieser Folie.

### Hintergrund der Erfindung

DE-A-10012261 beschreibt eine Adhäsionsfolie, deren Haftschicht aus Weich-PVC und deren Trägerschicht aus Polyester, PVC, Polyethylen, Polypropylen, Polyacrylat oder Verbunden davon besteht. Auf der Trägerschicht kann eine Deckschicht aus verschiedenen Kunststoffen, Papier, Metallfolie oder Lack-/Farbbeschichtungen angeordnet sein. Diese Folie ist jedoch aufgrund der Verwendung von PVC unter Gesichtspunkten der Umweltverträglichkeit bei der Entsorgung und der beschränkten Eignung zum Recycling bedenklich.

US-A-2002/0177669 offenbart einen druckempfindlichen Film für den temporären Schutz von Oberflächen. Der Film besteht aus einer Polyolefinbasierten Trägerschicht und einer darauf angeordneten druckempfindlichen Adhäsionsschicht bestehend aus zwei Komponenten.

WO-A-91/17944 offenbart ein durch Koextrusion gebildetes Laminat, bestehend aus einer Adhäsionsschicht aus LVLDPE und einer weniger adhäsiven Schicht, die beispielsweise aus LLDPE bestehen kann. Weitere Schichten anderer Materialien können sich zwischen diesen Schichten befinden. Die offenbarten Laminate, die mehr als zwei Schichten umfassen, beinhalten als äußere Schichten eine Adhäsionsschicht (bezeichnet als "cling layer" oder "reverse layer") und eine weniger adhäsive Schicht (bezeichnet als "obverse layer"). Beide Schichten bestehen aus einem Polymer.

EP-A-0541528 beschreibt eine Verbundfolie bestehend aus wenigstens 2 Schichten, wobei eine der beiden äußeren Schichten aus linear low density Polyethylen (LLDPE) mit einer Dichte von wenigstens 0,916 g/cm³ und die andere der beiden äußeren Schichten aus linear very low density-Polyethylen mit einer Dichte von weniger als 0,915 g/cm³ und einem klebrig machenden Mittel besteht.

Es gibt jedoch keinen PVC-freien Träger für bildliche und/oder schriftliche Information, welcher ohne Rückstände zu hinterlassen, wieder verwendbar auf glatten Oberflächen haftet. Bei dem Träger von bildlicher und/oder schriftlicher Information handelt es sich insbesondere um Papier, Kunststofffolien (z.B. bedruckte opake oder transparente Polyester-, Polyethylen- oder Polypropylenfolien) oder gegebenenfalls bedruckte Metallfolien.

Es ist daher Aufgabe ein mehrfach verwendbares, haftendes Medium bereitzustellen, welches auf glatten bzw. glänzenden Oberflächen, wie beispielsweise Metall oder Glas ohne Verwendung von Klebstoffen haftet und welches auch nach längerer Zeit des Haftens auch nach Temperatur- und Sonneneinwirkung rückstandsfrei wieder von der Oberfläche entfernt werden kann und mit dem verschiedenste Materialien, wie beispielsweise Papier, textile Materialen, Kunststofffolien, Metallfolien auf den glatten Oberflächen befestigt werden können. Dabei soll auf die Verwendung von PVC im Folienverbund vollständig verzichtet werden. Außerdem ist es notwendig, dass die Verbundfolie dimensionsstabil und recyclebar ist.

### Kurzbeschreibung der Erfindung

Die Erfindung betrifft eine dimensionsstabile PVC-freie Kunststoffverbundfolie, umfassend eine polymere Haftschicht (1) und eine klebstofffrei auf der Haftschicht (1) angeordnete polymere Trägerschicht (2) dadurch gekennzeichnet, dass auf der Trägerschicht (2) wenigstens eine weitere Schicht (3) angeordnet ist, die ausgewählt ist aus der Gruppe bestehend aus Papier, Karton, textilem Material, Metall, transparentem oder opakem Polyester oder Polypropylen oder einem Klebstoff der ausgewählt ist aus der Gruppe bestehend aus Dispersionsklebstoffen, Acrylatklebstoffen, Lösungsmittelklebstoffen und Haftklebern.

Die Erfindung betrifft ferner die Verwendung der selbsthaftenden Kunststoffverbundfolie als Papier, Etikett, Oberflächenschutz, Befestigungshilfe, Dekoration, Haftvermittler in industriellen Produktionsabläufen, Spiel- oder Organisationsmittel oder um Papiere/Folien selbsthaftend auszurüsten.

Im Gegensatz zu Verbundfolien, welche für Verpackungszwecke eingesetzt werden und die Reckfolien sind, sind die erfindungsgemäßen Kunststoffverbundfolien ungereckte, dimensionsstabile Folienverbunde, die darüber hinaus PVC-frei sind.

In einer alternativen Ausgestaltung der Erfindung ist die Verbundfolie dadurch gekennzeichnet, dass die Schicht (3) eine Klebstoffschicht ist. Vorzugsweise weist diese eine Dicke von 3 bis 50 µm,bevorzugt von 7 bis 30 µm, besonders bevorzugt von 10 bis 20 µm auf. Der Klebstoff ist für diese Ausführungsform der Erfindung ausgewählt aus der Gruppe bestehend aus Dispersionsklebstoffen, Acrylatklebstoffen, Lösungsmittelklebstoffen oder Haftklebern (im Stand der Technik auch als "pressure sensitive adhesive" bekannt). Im Zusammenhang mit dieser Ausgestaltung, bei der also auf der Schicht (3) keine weitere Schicht angeordnet ist, ist auf der Haftschicht (1) vorzugsweise eine Abdeckschicht (4) angeordnet, die aus einem silikonisierten Papier besteht, wobei die silikonisierte Seite nach außen (von der Haftschicht (1)) weg zeigt. So wird in der Rolle ein Aneinanderkleben der Einzelfolien durch die Klebstoffschicht (3) vermieden.

Weitere bevorzugte Ausführungsformen ergeben sich aus den abhängigen Ansprüchen.

### Beschreibung der Figuren

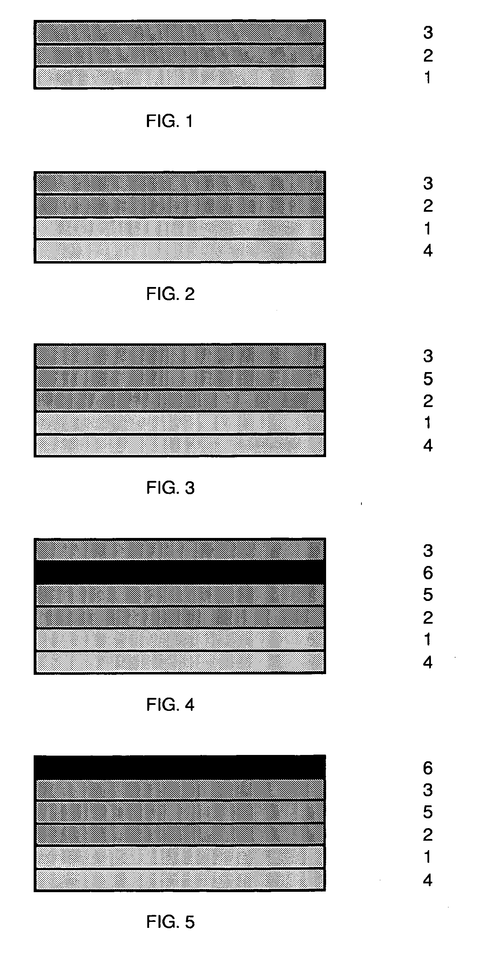

Figur 1 zeigt den Aufbau der Kunststoffverbundfolie gemäß der Erfindung umfassend eine Haftschicht, eine Trägerschicht und eine auf der Trägerschicht angeordnete weitere Schicht, welche der Träger von Information, wie beispielweise einer Abbildung oder Beschriftung sein kann.
Figur 2 zeigt den Aufbau der Kunststoffverbundfolie gemäß der Erfindung, welche auf der Seite der Haftschicht eine Abdeckschicht aufweist, welche die Haftschicht vor Verschmutzung oder der Haftung an sich selbst schützt und das Anstanzen ermöglicht.
Figur 3 zeigt den Aufbau einer Kunststoffverbundfolie gemäß der Erfindung, welche zwischen der Trägerschicht und der weiteren, auf der Trägerschicht angeordneten Schicht eine Klebstoffschicht aufweist.
Figur 4 zeigt den Aufbau einer Kunststoffverbundfolie gemäß der Erfindung, welche zwischen der Trägerschicht und der weiteren, auf der Trägerschicht angeordneten Schicht eine Bedruckung aufweist.
Figur 5 zeigt den Aufbau einer Kunststoffverbundfolie gemäß der Erfindung, welche auf der über der Trägerschicht angeordneten Schicht eine Bedruckung aufweist.

Die aus den Figuren entnehmbaren Schichtdicken sind nicht maßstabsgetreu.

### Detaillierte Beschreibung der Erfindung

Die erfindungsgemäße Kunststoffverbundfolie haftet, nach Abziehen einer gegebenenfalls auf der Haftschicht (1) angeordneten Abdeckschicht (4), mit der Haftschicht (1) auf Grund von Adhäsion auf glatten Oberflächen. Im Zusammenhang mit der Erfindung bedeuten 'glatte Oberflächen' alle mikroskopisch geschlossenen Oberflächen. Solche Oberflächen sind für gewöhnlich durch ein glänzendes Aussehen erkennbar. Beispiele für glatte Oberflächen sind Glas-, polierte Metall-, Keramik-, polierte Stein- oder Lackoberflächen und glänzende Kunststoffoberflächen.

Adhäsion bedeutet im Rahmen der Erfindung die Haftwirkung zwischen einer festen Grenzfläche (der glatten Oberfläche) und einer zweiten Phase, die aus einem kontinuierlichen Film (der Haftschicht (1)) besteht. Die Adhäsion kann durch elektrostatische Kräfte, durch zwischenmolekularen Kräfte wie Dipol-Dipol-Wechselwirkung (z.B. Wasserstoffbrückenbindungen), van der Waals Kräfte, Dipol-induzierter Dipol-Wechselwirkung und London-Kräfte oder auch durch echte chemische Bindung (z.B. Chemisorption) bedingt sein. Zumeist treten die unterschiedlichen Mechanismen der Adhäsion in Kombination auf.

Durch die allein auf Adhäsion beruhende Haftung der Haftschicht (1) lässt sich die erfindungsgemäße Verbundfolie ohne Anwendung eines zusätzlichen Klebstoffs auf glatten Oberflächen für beliebig lange Zeit oder auch nur kurze Zeitintervalle befestigen und kann rückstands- und zerstörungsfrei wieder abgelöst werden.

Wenn im Folgenden von der Dichte der Schichten die Rede ist, so ist damit die Dichte des polymeren Materials gemeint, aus webhem die jeweilige Schicht besteht.

Die polymere Haftschicht (1) weist eine Dichte von bis zu 0,930 g/cm³, vorzugsweise bis zu 0,920 g/cm³, besonders bevorzugt bis zu 0,910 g/cm³ und wenigstens eine Dichte von 0,860 g/cm³ auf.

Die erfindungsgemäße Verbundfolie ist vorzugsweise dadurch gekennzeichnet, dass die polymere Haftschicht (1) aus linear low density Polyethylen (LLDPE) mit einer Dichte von 0,910 bis 0,920 g/cm³, vorzugsweise von 0,910 bis 0,919 g/cm³, besonders bevorzugt 0,910 bis 0,916 g/cm³ oder linear very low density Polyethylen (LULDPE) mit einer Dichte von 0,900 bis 0,916 g/cm³, vorzugsweise von 0,900 bis 0,915 g/cm³, besonders bevorzugt 0,910 bis 0,914 g/cm³ besteht.

Die Trägerschicht (2) der erfindungsgemäßen Verbundfolie weist vorzugsweise eine Dichte von 0,910 bis zu 0,965 g/cm³, mehr bevorzugt von 0,910 bis zu 0,965 g/cm³, und besonders bevorzugt 0,925 bis zu 0,965 g/cm³ auf.

In einer besonderen Ausgestaltung der Erfindung ist der Folienverbund dadurch gekennzeichnet, dass die polymere Trägerschicht (2) aus low density Polyethylen (LDPE) mit einer Dichte von 0,915 bis 0,935 g/cm³, vorzugsweise von 0,920 bis 0,935 g/cm³, besonders bevorzugt 0,925 bis 0,935 g/cm³, oder high density Polyethylen (HDPE) mit einer Dichte von 0,940 bis 0,965 g/cm³, vorzugsweise von 0,945 bis 0,965 g/cm³, besonders bevorzugt 0,950 bis 0,965 g/cm³, besteht.

Im Zusammenhang mit der Erfindung bedeuten linear low density Polyethylen (im Folgenden als LLDPE abgekürzt) und linear very low density Polyethylen (entspricht linear ultra low density Polyethylen und wird im Folgenden als LULDPE abgekürzt) eine Klasse von Kunststoff, die ein im Wesentlichen linear aufgebautes Polymer beschreibt, das durch Polymerisation von Ethen erhältlich ist. Das Polymer kann ein Copolymer von Ethen mit längerkettigen Olefinen sein, insbesondere C₃-C₁₂-α-Olefinen, wie Propen, 1-Buten, 1-Isobuten, 1,3-Dimethyl-1-buten, 1-Penten, 1-Isopenten, 1,3-Dimethyl-1-penten, 4-Methyl-1-penten, 1-Hexen, 1-Isohexen, 3-Methyl-1-hexen, 1-Hepten, 1-Isohepten, 1-Octen, 1-Isoocten, 1-Nonen, 1-Isononen, 1-Decen, 1-Isodecen, 1-Undecen, 1-Isoundecen, 1-Dodecen, 1-Isododecen sowie weiteren Isomeren der genannten Olefine oder Kombinationen davon. Die genannten längerkettigen α-Olefine können in Mengen von 1 bis 20 Gew.-%, 2 bis 18, 3 bis 17, 4 bis 16, 5 bis 15, 6 bis 14, 7 bis 13, 8 bis 12, 9 bis 11 oder 10 Gew.-% bezogen auf das Gesamtgewicht des Copolymers enthalten sein.

LLDPE und LULDPE unterscheiden sich in der Dichte, die über Anteil und Art der verwendeten Comonomere gesteuert werden kann. LULDPE hat typischerweise eine Dichte von 0,860 bis 0,915 g/cm³.

LLDPE und LULDPE werden typischerweise durch Übergangsmetall-katalysierte Polymerisation bei relativ niedrigem Druck hergestellt, wobei Katalysatoren des Ziegler-, Natta- oder Phillips-Typ verwendet werden können, die dem Fachmann allgemein bekannt sind. Hinsichtlich weiterer Details der Herstellung und Eigenschaften wird auf die US Patente 3,654,992; 4,076,698; 4,011,382; 4,163,831; 4,205,021; 4,302,565; 4,302,566; 4,359,561 und 4,522,987 Bezug genommen.

LLDPE, das unter Metallocen-Katalyse hergestellt worden ist (im folgenden als M-LLDPE abgekürzt) bezeichnet im Zusammenhang mit dieser Erfindung einen LLDPE-Typ, der eine sehr kleine Molmassen-Verteilung aufweist.

Im Zusammenhang mit dieser Erfindung bevorzugt sind LLDPE und LULDPE mit einem Gewichtsanteil an mit n-Hexan extrahierbarem Material, da solche Polyethylen-Harze eine höhere/nennenswerte Adhäsion auf glatten Oberflächen zeigen. Beispielsweise kann mit einem LLDPE oder LULDPE, das einen mit n-Hexan extrahierbaren Gewichtsanteil von 3 bis 15 Gew.-%, bezogen auf das Gesamttrockengewicht, aufweist eine Adhäsionsfolie hergestellt werden. Bevorzugt sind mit n-Hexan extrahierbare Gewichtsanteile von 4 bis 10 Gew.-%, mehr bevorzugt 5 bis 8 Gew.-% bezogen auf das Gesamttrockengewicht. Low density Polyethylen (im Folgenden als LDPE abgekürzt) bezeichnet im Zusammenhang mit dieser Erfindung aus verzweigten Polyethylenketten bestehende Harze mit niedriger Dichte, die für den Fachmann in bekannter Weise durch radikalische Polymerisation bei hohem Druck und hoher Temperatur hergestellt werden. Die Dichte beträgt typischerweise 0,915 bis 0,935 g/cm³.

High density Polyethylen (im Folgenden als HDPE abgekürzt) bezeichnet im Zusammenhang mit dieser Erfindung Polyethylen-Harze, die im Wesentlichen analog zu LLDPE hergestellt werden, jedoch keine α-Olefine als Copolymere enthalten. Als Polymerisationskatalysatoren können dem Fachmann bekannte Chromverbindungen oder Ziegler-Typ-Katalysatoren verwendet werden. Die Dichte beträgt typischerweise 0,940 bis 0,965 g/cm³, vorzugsweise von 0,945 bis 0,965 g/cm³, besonders bevorzugt 0,950 bis 0,965 g/cm³.

Die Haftschicht (1) besteht im Wesentlichen aus LLDPE, das jedoch in geringem Umfang andere Polymere (beispielsweise klebrigmachende Mittel, "tackifier") und Zusatzstoffe enthalten kann, um die Adhäsionseigenschaften zu steuern. Auf diese Weise kann die Adhäsionskraft der Haftschicht (1) an unterschiedlichste Erfordernisse angepasst werden, so dass eine ausreichende Adhäsion erreicht werden kann. Im Zusammenhang mit dieser Erfindung bedeutet "ausreichende Adhäsion" eine Adhäsion auf der jeweiligen glatten Oberfläche, die ausreichend stark ist, um die Kunststoffverbundfolie sicher zu halten. Die LLDPE-Harze, die im Rahmen dieser Erfindung verwendet werden, können C₃-C₆-Polyolefine mit niedrigem Molekulargewicht enthalten, beispielsweise Polypropylen, Polybuten, Polyisobuten, Polyhexen oder Kombinationen davon. Es können auch Copolymere der C₂-C₆-Olefine mit niedrigem Molekulargewicht enthalten sein, beispielsweise Ethen-Alkylacrylat-Copolymere, Ethen-Acrylsäure-Copolymere, Ethen-Vinylalkylat-Copolymere, Ethen-Methacrylsäure-Coplymere. Die enthaltenen Mengen dieser klebrigmachenden Mittel sind so gewählt, dass sie mit dem Polyethylen kompatibel sind. Um die kompatible Menge zu erhöhen, können Hilfsstoffe zugesetzt werden. Der Ausdruck 'niedriges Molekulargewicht' bedeutet im Zusammenhang mit dieser Erfindung, dass die Moleküle der klebrigmachenden Mittel ausreichend klein sind, um sich an der Oberfläche der Haftschicht (1) anzuordnen, wodurch die gewünschte Erhöhung der Adhäsion erreicht wird. Die niedrigen Molekulargewichts der klebrigmachenden Mittel ergeben ein MFR, das zu hoch ist, um nach der Methode gemäß ASTM D-1238 bei 190 °C/2,16 kg gemessen werden zu können und werden daher bei niedrigerer Temperatur und/oder niedrigerem Druck gemessen, z.B. bei 125 °C/0,325 kg oder niedriger.

Bevorzugt sind Polyisobuten mit einem numerischen mittleren Molekulargewicht von 1000 bis 3000 g/mol (bestimmt durch Dampfphasen-Osmometrie), amorphe ataktische Polypropylene, z.B. mit einem mittleren Molekulargewicht von 2000, Polyterpene und Ethylen-Vinylacetat-Copolymere mit einem Anteil von 5 bis 15 Gew.-% copolymerisiertem Vinylacetat als klebrigmachende Mittel in der Haftschicht (1) enthalten. Diese Additive können in Konzentrationen von 0,01 bis 10 Gew.-%, bevorzugt 0,01 bis 6 Gew.-%, mehr bevorzugt 0,01 bis 3 Gew.-%, bezogen auf das LLDPE-Harz verwendet werden.

Die Haftschicht (1) kann weiterhin ein Polymer umfassen, welches ausgewählt ist aus der Gruppe bestehend aus Polyolefin-Plastomeren (POP) mit einer Dichte von 0,860 bis 0,920 g/cm³, vorzugsweise von 0,865 bis 0,915 g/cm³, besonders bevorzugt 0,870 bis 0,910 g/cm³, Polyolefin-Elastomeren (POE) mit einer Dichte von 0,860 bis 0,920 g/cm³, vorzugsweise von 0,865 bis 0,915 g/cm³, besonders bevorzugt 0,870 bis 0,910 g/cm³,und Metallocen-Polyethylen (m-LLDPE) mit einer Dichte von 0,910 bis 0,930 g/cm³, vorzugsweise von 0,910 bis 0,925 g/cm³, besonders bevorzugt 0,910 bis 0,915 g/cm³, oder Gemischen davon.

Die Haftschicht (1) kann das Polyolefin-Plastomere (POP), das Polyolefin-Elastomere (POE), das Metallocen-Polyethylen (m-LLDPE), oder deren Gemische in einem Anteil von 0 bis 100 Gew.-%, vorzugsweise von 2 bis 50 Gew.-%, besonders bevorzugt von 4 bis 25 Gew.-%, bezogen auf die Gesamtmenge der Haftschichtpolymere umfassen.

Bevorzugt wird LULDPE, das 1-Octen als α-Olefin-Comonomer enthält. Die Schmelzflussgeschwindigkeit ("melt flow rate", MFR), gemessen nach ASTM D-1238 bei 190 °C/2,16 kg beträgt bevorzugt 0,1 bis 25 g/10 min., mehr bevorzugt 0,5 bis 15 g/10 min., am meisten bevorzugt 0,7 bis 10 g/1 0 min.

Weitere konventionelle Zusatzstoffe, wie Antioxidantien, UV-Stabilisatoren, Antiblock-Mittel, Pigmente und Farbstoffe können in den dem Fachmann bekannten Mengen im LLDPE-Harz enthalten sein. In einer besonders bevorzugten Ausführungsform ist die Haftschicht (1) transparent und farblos. In einer weiteren Ausführungsform ist dien Haftschicht frei von Klebrigmachern.

In einer bevorzugten Ausgestaltung ist die Dichte der Haftschicht (1 ) niedriger als die Dichte der Trägerschicht (2).

Die Trägerschicht (2) hat die Aufgabe, der Folie die notwendige Dimensionsstabilität zu geben. Das bedeutet insbesondere, dass die Trägerschicht (2) dem Folienverbund die Stabilität verleihen muss, die notwendig ist, um die bei wiederholtem Haftenlassen an einer glatten Oberfläche und nachfolgendem Abziehen auftretenden mechanischen Belastungen ohne Schäden zu überstehen. Unzureichende Stabilität der Trägerschicht (2) könnte durch die Zugbelastungen eine Verzerrung oder sogar ein Reißen des Folienverbundes zur Folge haben. Ein als Schicht (3) auf dem Folienverbund angebrachtes Medium würde dadurch jedoch ebenfalls beschädigt oder zerstört, so dass die Erfindung ihren Zweck - der zerstörungsfreien Ablösbarkeit - nicht mehr erfüllen würde. Andererseits wirkt sich eine zu große Dicke der Trägerschicht (2) negativ auf die Fähigkeit der Verbundfolie aus, in der Oberfläche vorhandene makroskopische Unebenheiten auszugleichen. Dadurch würde die haftende Fläche und somit auch die Haftung reduziert. Unzuverlässiges Haften auf der glatten Oberfläche wäre die Folge. Darüber hinaus würde das Gewicht der Verbundfolie erhöht, ohne dass dadurch ein zusätzlicher Nutzen erzielt würde, und der Materialaufwand und damit die wirtschaftliche Herstellbarkeit der Verbundfolie würden negativ beeinflusst.

Die Trägerschicht (2) besteht aus LDPE oder HDPE oder Kombinationen davon und kann, wie auch die Haftschicht (1) weitere dem Fachmann bekannte Zusatz- und Hilfsstoffe, wie beispielsweise Antioxidantien, UV-Stabilisatoren, Antiblock-Mittel, Pigmente und Farbstoffe enthalten. Diese können in den dem Fachmann bekannten Mengen zugefügt werden. In einer besonders bevorzugten Ausführungsform ist die Trägerschicht (2) transparent und farblos.

Es wurde gefunden, dass eine Dicke der Trägerschicht (2) von 30 bis 150 µm, bevorzugt 30 bis 100 µm, mehr bevorzugt 40 bis 60 µm, am meisten bevorzugt 45 bis 55 µm am besten geeignet ist, um die oben dargestellten Rahmenbedingungen zu erfüllen.

Die Verbundfolie gemäß der Erfindung umfassend die Haftschicht (1), die Trägerschicht (2) und die Schicht (3) weist, einschließlich der gegebenenfalls zwischen der Trägerschicht (2) und der Schicht (3) angeordneten Klebstoff- und/oder Bedruckungsschicht(en), vorzugsweise eine Dicke von 65 bis 300 µm, bevorzugt 70 bis 250 µm, mehr bevorzugt 80 bis 210 µm, am meisten bevorzugt 100 bis 180 µm auf.

Die Haftschicht (1) verleiht der Verbundfolie eine zur Adhäsion an glatte Oberflächen geeignete Seite. Da die Festigkeit der Verbundfolie durch die Trägerschicht (2) gewährleistet wird, kann die Dicke der Haftschicht (1) so niedrig gewählt werden, wie es produktionstechnisch möglich ist, ohne einen unverhältnismäßig hohen maschinellen Aufwand notwendig zu machen. Diesen Bedingungen wird eine Haftschicht (1) mit einer Dicke von 5 bis 50, bevorzugt 5 bis 25 µm, mehr bevorzugt 10 bis 20 µm, am meisten bevorzugt 12 bis 17 µm gerecht.

Herstellung der Verbundfolie erfolgt bevorzugt durch Coextrusion der für Haftschicht (1) und Trägerschicht (2) verwendeten Polymerzusammensetzung. Durch das teilweise Verschmelzen der beiden noch heißen Schichten an der Kontaktfläche werden Haftschicht (1) und Trägerschicht (2) klebstofffrei und untrennbar miteinander verbunden. Anschließend wird auf die Trägerschicht die Schicht (3) aufgebracht. Die exakte Ausführung dieses Schritts richtet sich nach dem aufzubringenden Material und kann auf vielfältige Weise erfolgen. Es kann beispielsweise ein Klebevorgang unter Verwendung eines zusätzlich aufzubringenden Klebstoffs gewählt werden, einschließlich einer Heißsiegelverbindung, oder die Schicht (3) kann auch analog zum Verbinden von Haftschicht (1) und Trägerschicht (2) in heißem Zustand mit der Trägerschicht (2) verbunden werden.

Um die Haftschicht (1) vor Verschmutzung beispielsweise durch Schwebstoffe wie Staub zu schützen, um unbeabsichtigtes Anhaften, beispielsweise an sich selbst beim Stanzen von Etiketten zu vermeiden und so eine einfache Handhabung zu gewährleisten, kann auf der Haftschicht (1) eine Abdeckschicht (4) angeordnet sein. Die Abdeckschicht (4) unterliegt hinsichtlich des Materials keinen Beschränkungen. Entscheidend für die Materialauswahl ist, dass das Material ein geringes Gewicht und ausreichende Flexibilität besitzt und an der Haftschicht (1) durch Adhäsion haftet. Dazu weist die Abdeckschicht (4) wenigstens eine glatte Oberfläche auf, beispielsweise aus Kunststoff oder Metall. Auch ein aus wenigstens zwei untrennbar miteinander verbundenen Schichten bestehendes Verbundmaterial kann als Abdeckschicht (4) gewählt werden, sofern es wenigstens eine glatte Oberfläche aufweist, an der die Haftschicht (1) durch Adhäsion haften kann. Das auf der der Haftschicht abgewandten Seite (Adhäsionsseite) angeordnete Material der Abdeckschicht (4) ist nahezu beliebig, sofern es ausreichend leicht und flexibel ist, um die Adhäsion der Verbundfolie nicht negativ zu beeinflussen. In der Regel ist es untrennbar mit dem Material der Adhäsionsseite der Abdeckschicht (4) verbunden. Somit können beispielsweise ein- oder mehrschichtige Kunststofffolien, ein- oder mehrschichtige Metallfolien, mit Kunststoff oder Metall, beschichtetes Papier, silikonisiertes Papier, gussgestrichenes Papier, mit Kunststoff oder Metall beschichteter Karton als Abdeckschicht (4) verwendet werden. Bevorzugt als Material der Adhäsionsseite sind Polyethylen, homopolymeres und copolymeres Polypropylen, PET oder einseitig glänzendes Papier. Je nach der späteren Anwendung kann die Abdeckschicht transparent sein.

Die Abdeckschicht (4) weist in allen alternativen Ausgestaltungen der Erfindung bevorzugt eine Dicke von 10 bis 300 µm, weiter bevorzugt von 12 bis 150 µm und insbesondere bevorzugt von 15 bis 90 µm auf. Eine bevorzugte Abdeckschicht (4) besteht aus Polypropylen, Polyethylenterephthalat (PET) oder Papier, besonders bevorzugte Abdeckschichten (4) bestehen aus einem Verbundmaterial, welches beispielsweise eine Polyethylenfolie (Gewicht etwa 15 g/m²) und Papier (Gewicht etwa 63 g/m²) umfasst oder aus einer dünnen Monofolie, beispielsweise Polypropylen in einer Stärke von 15 bis 20 µm Die Abdeckschicht (4) kann so gewählt sein, dass aus der Verbundfolie Etiketten gestanzt werden können. Entsprechende Techniken zum Stanzen von Etiketten aus Verbundmaterialen sind im Stand der Technik bekannt und es wird insoweit darauf Bezug genommen.

Die auf der Trägerschicht (2) angeordnete Schicht (3) unterliegt hinsichtlich Art, Form und Materials nur der Beschränkung, dass Gewicht und Flexibilität des Materials die Adhäsion der Haftschicht (1) im jeweiligen Anwendungsfall nicht unmöglich machen. Besitzt die Schicht (3) zu hohes Gewicht, so kann die Adhäsionskraft der Haftschicht (1) unter Umständen nicht ausreichen, um die Verbundfolie im Falle des senkrechten Anhaftens auf der glatten Oberfläche sicher zu halten, auf der die Schwerkraft der Adhäsion wenigstens teilweise entgegen wirkt. Auch bei Haftung auf einer horizontalen Oberfläche, in der Art, dass die auf die Verbundfolie wirkende Schwerkraft der Adhäsion nicht entgegenwirkt, kann das Gewicht Begrenzungen unterliegen. Dies ist der Fall, wenn sich die glatte Oberfläche bewegt und in erster Linie auf die Massenträgheit zurückzuführende Kräfte auftreten.

Flexibilität der Schicht (3) ist in erster Linie in den Fällen von Bedeutung, in denen die Verbundfolie auf einer flexiblen, seine Form ändernden Oberfläche haften soll.

Zur Haftung auf einer starren, planebenen Oberfläche unterliegt die Flexibilität dagegen praktisch keinen Anforderungen.

Jedes der genannten Materialien der Schicht (3) kann ein- oder mehrfarbig oder schwarz-weiß sein und ein regelmäßiges oder unregelmäßiges Muster und/oder eine regelmäßige oder unregelmäßige Struktur aufweisen. In besonderen Ausführungsformen kann die Schicht (3) eine fluoreszierend ausgerüstete Kunststofffolie, ein fluoreszierend ausgerüstetes Papier, ein Holzfurnier, einen fotografischen Film (belichtet oder unbelichtet), insbesondere eine Röntgenfolie, eine holografische Folie oder ein fotografisches Papier umfassen.

Besondere Ausgestaltungen der Erfindung sind dadurch gekennzeichnet, dass auf der Schicht (3) in den Fällen in denen sie ausgewählt ist aus der Gruppe bestehend aus Papier, Karton, textilem Material transparentem oder opakem Polyester oder Polypropylen und Metall eine ein - oder beidseitige Bedruckung angeordnet ist. In einer alternativen Ausgestaltung der Erfindung ist die Bedruckung auf der der Trägerschicht (2) zugewandten Seite der Schicht (3) angeordnet. Grundsätzlich kann es sich bei der Bedruckung um eine ein- oder mehrfarbige Abbildung und/oder eine Beschriftung handeln. In solchen Fällen ist die Schicht (3) vorzugsweise aus Papier, Karton oder einer transparenten oder opaken Polyester-, oder Polypropylenfolie ausgestaltet. Auch Metallfolien kommen grundsätzlich als Substrat für eine Bedruckung in Frage. Die Bedruckung oder die zur Bedruckung angewandte Technik unterliegt keinerlei Beschränkungen und kann beispielsweise eine Offset-, Inkjet-, Flexo-, Digital- oder Siebdruck-Bedruckung sein. Bei transparenten Schichten (3) kann die Bedruckung auch beidseitig angeordnet sein. Bei bedruckten transparenten Schichten (3) kann auf der Schicht (3) noch eine weitere Schicht, (nicht in den Figuren wiedergegeben) beispielsweise aus Papier oder opakem Kunststoff angeordnet sein, welche bei einem im Übrigen transparenten Schichtenaufbau der Bedruckung mehr Kontrast verleiht.

In einer weiteren besonderen Ausgestaltung der Erfindung, insbesondere wenn die Schicht (3) ausgewählt ist aus der Gruppe bestehend aus Papier, Karton, textilem Material transparentem oder opakem Polyester oder Polypropylen und Metall und nicht von selbst auf der Trägerschicht (2) haftet, kann zwischen der Trägerschicht (2) und der Schicht (3) eine Klebstoffschicht (5) angeordnet sein. Typische Klebstoffe sind ausgewählt aus der Gruppe der Dispersions-, Acrylat-, Lösungsmittel-, oder Haft-Klebstoffe. Entscheidend ist die Verträglichkeit des Klebstoffes mit den eingesetzten Materialien.

Die Klebstoffschicht (5) weist in der Regel eine Dicke von 3 bis 50 µm, bevorzugt von 7 bis 30 µm, besonders bevorzugt von 10 bis 20 µm auf. Die Klebstoffschicht (5) ist vorzugsweise transparent.

Ist die Schicht (3) als Klebstoffschicht ausgestaltet, so kann der Klebstoff ebenfalls ausgewählt sein aus der Gruppe der Dispersions-, Acrylat-, und Lösungsmittel-Klebstoffe. Ferner kann die Klebstoffschicht durch einen Haftkleber gebildet werden. Haftkleber sind dem Fachmann auch unter der Bezeichnung "pressure sensitive adhesive" bekannt (vgl. z.B. Römpp-Lexikon Chemie, Georg Thieme Verlag, 9. Auflage, 1997, Seite 1959). Der Vorteil eines Haftklebers darin liegt in dem wiederholbaren Anhaften des Folienverbundes nicht nur auf glatten Oberflächen, sondern auch auf raueren Oberflächen, wie beispielsweise Papier-, Holz- oder Textiloberflächen.

In weiteren Ausgestaltungen der Erfindung ist die Verbundfolie dadurch gekennzeichnet, dass die Haftschicht (1) und die Trägerschicht (2) transparent sind, und/oder dass die Abdeckschicht (4), sofern vorhanden, transparent ist. Weiterhin kann nur die Schicht (3) nicht transparent, also opak sein.

In einer weiteren Ausgestaltung kann die Schicht (3) für den Fall, dass sie ausgewählt ist aus der Gruppe bestehend aus Papier, Karton, textilem Material transparentem oder opakem Polyester oder Polypropylen und Metall auf der der Trägerschicht (2) abgewandten Schicht bedruckt sein. In einem solchen Fall ist die Schicht (3) vorzugsweise opak. Auf der Bedruckung kann wiederum eine Schicht, beispielsweise zum Schutz der Bedruckung, angeordnet sein, die jedoch transparent ist. Als solche Schichten eignen sich insbesondere transparente Polyester oder Polypropylen. Die Schichtdicke beträgt von 5 bis 100 µm, bevorzugt von 10 bis 75 µm, besonders bevorzugt von 15 bis 60 µm.

Die erfindungsgemäße Verbundfolie kann vom Fachmann nach an sich bekannten Verfahren der Coextrusion, Heißversiegelung, dem Verkleben von Filmen und Folien sowie dem Bedrucken von Substraten (Papier, Karton, transparente und opake Filme und Folien) ohne Weiteres hergestellt werden. Es wird insoweit auf herkömmliche, aus dem Stand der Technik bekannte Verfahren verwiesen.

Die Erfindung betrifft ferner die Verwendung der erfindungsgemäßen Verbundfolie als selbsthaftendes Papier, Etikett, Oberflächenschutz, Befestigungshilfe, Dekoration, Haftvermittler in industriellen Produktionsabläufen, Spiel- oder Organisationsmittel. Beispielsweise kann die Schicht (3) auf der der transparenten Trägerschicht (2) zugewandten Seite mit Motiven oder Schrift bedruckt sein. Eine solche Folie kann erfindungsgemäß in Form des Folienverbunds umfassend die Haftschicht (1) und die Trägerschicht (2) insbesondere an die Innenseite von Scheiben, beispielsweise von Schaufenstern, Glastüren, Autoscheiben angehaftet werden. Die Abbildung ist dann von der Außenseite der Glasscheibe sichtbar. Dies ist vor allem für Dekoration und

Werbeanbringung geeignet. Nach dem Abziehen der Folie kann sie wieder verwendet werden. In dem Fall, dass die Schicht (3) auf der der transparenten Trägerschicht (2) abgewandten Seite mit Motiven oder Schrift bedruckt ist, kann sie erfindungsgemäß in Form des Folienverbunds umfassend die Haftschicht (1) und die Trägerschicht (2) an die Außenseite von den genannten Scheiben, oder auch auf andere glatte Oberflächen, wie Metalle, lackierte Oberflächen, etc. geklebt werden.

Im Falle der Ausgestaltung, dass die Schicht (3) aus Klebstoff besteht, ohne selbst durch eine zusätzliche Schicht abgedeckt zu sein, weist die Haftschicht (1) eine wie oben beschriebene Abdeckschicht (4) auf, die jedoch rückseitig eine Silikonbeschichtung trägt. Der Verbund kann dann auf sich selbst gewickelt werden, wobei die besagt "offene" Klebstoffschicht in der Rolle durch die silikonisierte Abdeckschicht (4) abgedeckt wird. Der Vorteil liegt darin, das man sich eine Abdeckschicht spart und den Verbund drekt gegen eine Fläche (z. B. ein Plakat) kleben kann. Wenn man dann anschließend die Abdeckschicht (4) vom Verbund abzieht, liegt nach außen die Haftschicht (1) frei. Der Plakatverbund haftet dann an jeder glänzenden Fläche. Der Verbund wird durch diese Ausgestaltung ein reine Befestigungshilfe. Plakate können damit nachträglich selbsthaftend ausgerüstet werden.

Nach dem wieder Abziehen der Folie kann sie wieder verwendet werden. Sollte der Folienverbund nicht mehr benötigt werden, so kann er problemlos recycled werden.

## Patentansprüche

1. Dimensionsstabile PVC-freie Kunststoffverbundfolie, umfassend eine polymere Haftschicht (1) und eine klebstofffrei auf der Haftschicht (1) angeordnete polymere Trägerschicht (2) **dadurch gekennzeichnet, dass** auf der Trägerschicht (2) wenigstens eine weitere Schicht (3) angeordnet ist, die ausgewählt ist aus der Gruppe bestehend aus Papier, Karton, textilem Material, Metall, transparentem oder opakem Polyester oder Polypropylen oder einem Klebstoff der ausgewählt ist aus der Gruppe bestehend aus Dispersionsklebstoffen, Acrylatklebstoffen, Lösungsmittelklebstoffen und Haftklebern.

2. Verbundfolie nach Anspruch 1, wobei die Haftschicht (1) eine Dichte von bis zu 0,930 g/cm³, vorzugsweise bis zu 0,920 g/cm³, besonders bevorzugt bis zu 0,910 g/cm³ und wenigstens eine Dichte von 0,860 g/cm³ aufweist.

3. Verbundfolie nach Anspruch 1, **dadurch gekennzeichnet, dass** die Trägerschicht (2) eine Dichte von 0,910 bis zu 0,965 g/cm³, vorzugsweise von 0,910 bis zu 0,965 g/cm³, besonders bevorzugt 0,925 bis zu 0,965 g/cm³ aufweist.

4. Verbundfolie nach irgendeinem der vorangehenden Ansprüche, **dadurch gekennzeichnet, dass** die Haftschicht (1) und die Trägerschicht (2) co-extrudiert sind.

5. Verbundfolie nach Anspruch 1, **dadurch gekennzeichnet, dass** die Haftschicht (1) eine Dicke von 5 bis 25 µm, bevorzugt von 10 bis 20 µm, besonders bevorzugt 12 bis 17 µm aufweist.

6. Verbundfolie nach Anspruch 1, **dadurch gekennzeichnet, dass** die Trägerschicht (2) eine Dicke von 30 bis 150 µm, bevorzugt von 30 bis 100 µm, besonders bevorzugt 40 bis 60 µm aufweist.

7. Verbundfolie nach irgendeinem vorangehenden Ansprüche, **dadurch gekennzeichnet, dass** die Verbundfolie umfassend die Haftschicht (1) und die Trägerschicht (2) eine Dicke von 40 bis 200 µm, bevorzugt von 45 bis 90 µm, besonders bevorzugt von 50 bis 70 µm aufweist.

8. Verbundfolie nach irgendeinem der vorangehenden Ansprüche, **dadurch gekennzeichnet, dass** auf der Haftschicht (1) eine Abdeckschicht (4) angeordnet ist.

9. Verbundfolie nach irgendeinem der Ansprüche 1 bis 8, **dadurch gekennzeichnet, dass** die Schicht (3) eine Klebstoffschicht ist und eine Dicke von 3 bis 50 µm, bevorzugt von 7 bis 30 µm, besonders bevorzugt von 10 bis 20 µm aufweist.

10. Verbundfolie nach irgendeinem der vorangehenden Ansprüche 1 bis 9, **dadurch gekennzeichnet, dass** die Schicht (3) ausgewählt ist aus der Gruppe bestehend aus Papier, Karton, textilem Material, Metall, transparentem oder opakem Polyester oder Polypropylen und darauf eine ein- oder beidseitige Bedruckung angeordnet ist.

11. Verbundfolie nach irgendeinem der vorangehenden Ansprüche 1 bis 10, **dadurch gekennzeichnet, dass** die Schicht (3) ausgewählt ist aus der Gruppe bestehend aus Papier, Karton, textilem Material, Metall, transparentem oder opakem Polyester oder Polypropylen und zwischen der Trägerschicht (2) und der Schicht (3) eine Klebstoffschicht (5) angeordnet ist.

12. Verbundfolie nach Anspruch 11, **dadurch gekennzeichnet, dass** die Klebstoffschicht (5) eine Dicke von 3 bis 50 µm, bevorzugt von 7 bis 30 µm, besonders bevorzugt von 10 bis 20 µm aufweist.

13. Verbundfolie nach Anspruch 8, **dadurch gekennzeichnet, dass** sie eine Abdeckschicht (4) umfassend ein silikonisiertes Papier aufweist, wobei die silikonisierte Seite die der Haftschicht (1) abgewandte Seite ist.

14. Verwendung der Verbundfolie nach irgendeinem der Ansprüche 1 bis 13 als selbsthaftendes Papier, Etikett, Oberflächenschutz, Befestigungshilfe, Dekoration, Haftvermittler in industriellen Produktionsabläufen, Spiel- oder Organisationsmittel oder um Papier/Folien damit selbsthaftend auszurüsten.

## Claims

1. Dimensionally stable PVC-free plastic composite sheet, comprising a polymeric adhesion layer (1) and a polymeric support layer (2) provided on the adhesion layer (1) without an adhesive, **characterized in that** on the support layer (2), there is provided at least one further layer (3) selected from the group consisting of paper, cardboard, textile material, metal, transparent or opaque polyester or polypropylene, or an adhesive selected from the group consisting of dispersion adhesives, acrylate adhesives, solvent adhesives and pressure-sensitive adhesives.

2. The composite sheet according to claim 1, wherein said adhesion layer (1) has a density of up to 0.930 9/cm³, preferably up to 0.920 g/cm³, more preferably up to 0.910 g/cm³, and has a density of at least 0.860 g/cm³.

3. The composite sheet according to claim 1, **characterized in that** said support layer (2) has a density of from 0.910 to 0.965 g/cm³, preferably from 0.910 to 0.965 g/cm³, more preferably from 0.925 to 0.965 g/cm³.

4. The composite sheet according to any of the preceding claims, **characterized in that** said adhesion layer (1) and said support layer (2) have been coextruded.

5. The composite sheet according to claim 1, **characterized in that** said adhesion layer (1) has a thickness of from 5 to 25 µm, preferably from 10 to 20 µm, more preferably from 12 to 17 µm.

6. The composite sheet according to claim 1, **characterized in that** said support layer (2) has a thickness of from 30 to 150 µm, preferably from 30 to 100 µm, more preferably from 40 to 60 µm.

7. The composite sheet according to any of the preceding claims, **characterized in that** said composite sheet comprising the adhesion layer (1) and the support layer (2) has a thickness of from 40 to 200 µm, preferably from 45 to 90 µm, more preferably from 50 to 70 µm.

8. The composite sheet according to any of the preceding claims, **characterized in that** a cover layer (4) is provided on said adhesion layer (1).

9. The composite sheet according to any of claims 1 to 8, **characterized in that** said layer (3) is an adhesive layer and has a thickness of from 3 to 50 µm, preferably from 7 to 30 µm, more preferably from 10 to 20 µm.

10. The composite sheet according to any of the preceding claims 1 to 9, **characterized in that** said layer (3) is selected from the group consisting of paper, cardboard, textile material, metal, transparent or opaque polyester or polypropylene, and printing is provided on one or two sides thereof.

11. The composite sheet according to any of the preceding claims 1 to 10, **characterized in that** said layer (3) is selected from the group consisting of paper, cardboard, textile material, metal, transparent or opaque polyester or polypropylene, and an adhesive layer (5) is provided between said support layer (2) and said layer (3).

12. The composite sheet according to claim 11, **characterized in that** said adhesive layer (5) has a thickness of from 3 to 50 µm, preferably from 7 to 30 um, more preferably from 10 to 20 µm.

13. The composite sheet according to claim 8, **characterized by** having a cover layer (4) comprising a siliconized paper, wherein the siliconized side is the side facing away from said adhesion layer (1).

14. Use of the composite sheet according to any of the claims 1 to 13 as a self-adhering paper, label, surface protection, attachment aid, decoration, adhesion mediator in industrial production processes, playing or organization means, or for providing self-adhesion property to paper/sheets.

## Revendications

1. Feuille composite en plastique sans PVC de dimensions stables, comprenant une couche d'adhérence polymère (1) et une couche de support polymère (2) prévue sur la couche d'adhérence (1) sans adhésif, **caractérisée en ce que** sur la couche de support (2) est prévue au moins une couche supplémentaire (3) sélectionnée dans le groupe constitué par le papier, le carton, la matière textile, le métal, le polyester ou polypropylène transparent ou opaque, ou un adhésif sélectionné dans le groupe constitué par les adhésifs en dispersion, les adhésifs d'acrylate, les adhésifs à solvant et les adhésifs sensibles à la pression.

2. Feuille composite selon la revendication 1, dans laquelle ladite couche d'adhérence (1) a une densité allant jusqu'à 0,930 g/cm³, de préférence jusqu'à 0,920 g/cm³, plus préférablement jusqu'à 0,910 g/cm³ et a une densité d'au moins 0,860 g/cm³.

3. Feuille composite selon la revendication 1, **caractérisée en ce que** ladite couche de support (2) a une densité de 0,910 à 0,965 g/cm³, de préférence de 0,910 à 0,965 g/cm³, plus préférablement de 0,925 à 0,965 g/cm³.

4. Feuille composite selon l'une quelconque des revendications précédentes, **caractérisée en ce que** ladite couche d'adhérence (1) et ladite couche de support (2) ont été coextrudées.

5. Feuille composite selon la revendication 1, **caractérisée en ce que** ladite couche d'adhérence (1) a une épaisseur de 5 à 25 µm, de préférence de 10 à 20 µm, plus préférablement de 12 à 17 µm.

6. Feuille composite selon la revendication 1, **caractérisée en ce que** ladite couche de support (2) a une épaisseur de 30 à 150 µm, de préférence de 30 à 100 µm, plus préférablement de 40 à 60 µm.

7. Feuille composite selon l'une quelconque des revendications précédentes, **caractérisée en ce que** ladite feuille composite comprenant la couche d'adhérence (1) et la couche de support (2) a une épaisseur de 40 à 200 µm, de préférence de 45 à 90 µm, plus préférablement de 50 à 70 µm.

8. Feuille composite selon l'une quelconque des revendications précédentes, **caractérisée en ce qu'**une couche de recouvrement (4) est prévue sur ladite couche d'adhérence (1).

9. Feuille composite selon l'une quelconque des revendications 1 à 8, **caractérisée en ce que** ladite couche (3) est une couche d'adhésive et a une épaisseur de 3 à 50 µm, de préférence de 7 à 30 µm, plus préférablement de 10 à 20 µm.

10. Feuille composite selon l'une quelconque des revendications 1 à 9, **caractérisée en ce que** ladite couche (3) est sélectionnée dans le groupe constitué par le papier, le carton, la matière textile, le métal, le polyester ou polypropylène transparent ou opaque et une impression est prévue sur un ou deux côtés de celle-ci.

11. Feuille composite selon l'une quelconque des revendications 1 à 10, **caractérisée en ce que** ladite couche (3) est sélectionnée dans le groupe constitué par le papier, le carton, la matière textile, le métal, le polyester ou polypropylène transparent ou opaque et une couche adhésive (5) est prévue entre ladite couche de support (2) et ladite couche (3).

12. Feuille composite selon la revendication 11, **caractérisée en ce que** ladite couche adhésive (5) a une épaisseur de 3 à 50 µm, de préférence de 7 à 30 µm, plus préférablement de 10 à 20 µm.

13. Feuille composite selon la revendication 8, **caractérisée par** le fait d'avoir une couche de recouvrement (4) comprenant un papier siliconé, dans laquelle le côté siliconé est la face opposée à ladite couche d'adhérence (1).

14. Utilisation de la feuille composite selon l'une quelconque des revendications 1 à 13 en tant que papier auto-adhésif, étiquette, protection de surface, aide à la fixation, décoration, agent d'adhérence dans les processus de production industriels, élément de jeu ou d'organisation, ou pour conférer une propriété auto-adhésive à des papiers/feuilles.
